# EUROPEAN PATENT SPECIFICATION

(11) **EP 3 608 111 B1**
(45) Date of publication and mention of the grant of the patent: **15.02.2023**
(21) Application number: 19189554.9
(22) Date of filing: 01.08.2019
(51) Int. Cl.: B41J 2/21, B41J 2/205, G06K 15/10, B41J 3/407, B41J 2/005, B41J 11/00, B41M 5/035, D06P 5/28

(54) **LIQUID EJECTING DEVICE AND LIQUID EJECTING METHOD**
FLÜSSIGKEITSAUSSTOSSVORRICHTUNG UND FLÜSSIGKEITSAUSSTOSSVERFAHREN
DISPOSITIF ET PROCÉDÉ D'ÉJECTION DE LIQUIDE

(30) Priority: 10.08.2018 JP 2018151362
(43) Date of publication of application: 12.02.2020
(73) Proprietor: Mimaki Engineering Co., Ltd., Tomi-city Nagano 389-0512 (JP)
(72) Inventor: HIOKI, Wataru, Tomi-city, Nagano 389-0512 (JP); CHIKA, Furuya, Tomi-city, Nagano 389-0512 (JP)
(74) Representative: Horn Kleimann Waitzhofer Patentanwälte PartG mbB

(56) References cited:
- EP-A1- 1 405 727
- EP-A1- 3 225 406
- EP-B1- 1 405 727
- WO-A1-2006/125780
- JP-A- 2016 141 102
- US-A1- 2003 146 963
- US-A1- 2016 309 056

## Description

### CROSS REFERENCE TO RELATED APPLICATIONS

This application claims the priority benefit of Japanese Patent Application No. 2018-151362, filed on August 10, 2018.

### TECHNICAL FIELD

The present disclosure relates to a liquid ejecting device and a liquid ejecting method.

### DESCRIPTION OF THE BACKGROUND ART

Various methods have been conventionally proposed for an inkjet recording apparatus to suppress degradation of image quality caused by ejection failure of an ink from a nozzle (see e.g., Japanese Unexamined Patent Publication No. 2015-130166). For example, Japanese Unexamined Patent Publication No. 2015-130166 discloses a method of complementary control in which complementary ejection is performed by a nearby nozzle so as to compensate for the amount of ink dot that is not ejected by a defective nozzle.

EP 1 405 727 A1 discloses relevant prior art.

### SUMMARY

In the complementary control disclosed in the configuration of Japanese Unexamined Patent Publication No. 2015-130166, when there is amount of misalignment between the amount of ink which is not ejected in one recording operation and the change amount in the amount of ejection ink by the nearby nozzle, the amount of misalignment is added to the amount of ink which is not ejected to define the change amount in the amount of ejection ink in the complementary ejection in the complementary control related to the recording operation to be performed next. However, when complementary control is performed in this manner, a problem arises in that the required calculation amount increases in the calculation of the amount of misalignment, the process of determining the change amount in the amount of ejection ink in the complementary ejection by adding the amount of misalignment, and the like. In addition, as a result, the time required for the calculation becomes long, which may affect the printing speed. Furthermore, in a case where a configuration capable of high-speed calculation is used, the cost of the device may greatly rise. Therefore, conventionally, it has been desired that in a case in which an abnormal nozzle whose ejection characteristic is deviated from a normal range, is present, the influence of the presence of the abnormal nozzle is suppressed more appropriately. The present disclosure thus provides a liquid ejecting device and a liquid ejecting method capable of overcoming such problem.

The inventors of the present application conducted intensive research on a method of recovery process, which is a process for suppressing the influence of the presence of an abnormal nozzle when an abnormal nozzle is present. Then, in a case where ink is ejected by another normal nozzle instead of the abnormal nozzle, consideration is made to determine the ejecting position and the amount of ink using a mask. With this configuration, the recovery process can be executed without performing many operations.

Here, in this regard, in the conventional recovery process, as in the method disclosed in, for example, Japanese Unexamined Patent Publication No. 2015-130166, it is considered important to accurately match the amount of ink ejected by another normal nozzle instead of the abnormal nozzle with the original ejection amount by the abnormal nozzle as much as possible. In this case, the original ejection amount by the abnormal nozzle is the amount of ink ejected when an abnormal nozzle is normal.

On the other hand, in a case where the recovery process is performed using a mask, the recovery process is not configured to be accurately performed in accordance with the original ejection amount of the abnormal nozzle due to the configuration using a mask prepared in advance. However, the inventors of the present application found that the recovery process can be appropriately performed even by a method using a mask in practice by actually performing various experiments and the like. In addition, the inventors found that particularly when ink dots widely spread to a certain extent or more on a medium to be printed (medium) such as a case of printing on a cloth, the recovery process can be simply and appropriately performed with high accuracy by using a mask.

Furthermore, the inventors of the present application found the features necessary for obtaining such effects through further intensive research, and have contrived the present disclosure. In order to solve the above-described problems, the present invention provides a liquid ejecting device according to claim 1.

According to an embodiment of the invention, the liquid ejecting device is a printing apparatus. Furthermore, the liquid ejecting target is a medium to be printed. Moreover, the liquid ejected from the inkjet head is ink. The inkjet head is an ejection head that ejects liquid through an inkjet method.

When configured in this manner, the ink can be ejected by another nozzle instead of the abnormal nozzle by increasing the ejection amount of the other nozzles. Thus, the recovery process can be appropriately performed in a case in which an abnormal nozzle is present. Furthermore, the recovery process can be easily and appropriately performed without performing many calculations by specifying ejecting positions at which the ejection amount of ink by other nozzles is increased and the ejection amount (increase amount of liquid) to be increased at these ejecting positions in the mask. Therefore, if configured in this way, when an abnormal nozzle is present, the influence of the presence of the abnormal nozzle can be appropriately suppressed.

Furthermore, when an abnormal nozzle is present, the control unit is configured not to cause the abnormal nozzle to eject the liquid and causes the other nozzle to eject liquid of a larger amount than at the normal time to some of the ejecting positions where the liquid can be ejected by the other nozzle in the main scan. Thereby, the influence of the abnormal nozzle can be more appropriately suppressed. Moreover, an inkjet head is used in which the volume of the liquid ejected from the nozzle can be changed in a plurality of levels (stages, degrees) as the inkjet head. Furthermore, the mask specifies, the number of levels by which the ejection amount is increased at the ejecting position for increasing the ejection amount of the liquid. Thereby, the volume of the liquid to be ejected can be made larger than at the normal time for the ejecting position where the liquid is ejected by another nozzle in the vicinity of the abnormal nozzle by increasing the ejection amount according to the number of levels specified by the mask.

A nozzle adjacent to the abnormal nozzle in the nozzle row direction is used as another nozzle in the vicinity of the abnormal nozzle. In other words, "another nozzle in a vicinity of the abnormal nozzle" means a nozzle that is arranged adjacent (immediately next) to the abnormal nozzle. Furthermore, there are specified, in the mask, the ejecting position for increasing the ejection amount of the liquid and the number of levels for increasing the ejection amount for a preset number of ejecting positions lined up in the main scanning direction. When an abnormal nozzle is present, the control unit periodically applies the mask for every preset number of ejecting positions for ejecting the liquid by the nozzle adjacent to the abnormal nozzle. Thereby, it is possible to cause the adjacent nozzle to eject liquid of a larger amount than at the normal time to some of the ejecting positions where the liquid can be ejected by the nozzle adjacent to the abnormal nozzle at the time of the main scan. Furthermore, the recovery process using a mask can be appropriately performed.

Further, the ejection amount of the liquid by the nozzle adjacent to the abnormal nozzle is increased only with respect to the ejecting position adjacent to the original ejecting position by the abnormal nozzle. Herein, the original ejecting position by the abnormal nozzle is the position at which the liquid should be ejected when the abnormal nozzle is a normal nozzle. Thus, when an abnormal nozzle is present, the control unit increases an amount of liquid to be ejected compared to the normal time based on the mask, but only with respect to ejecting positions adjacent in the nozzle row direction to ejecting positions of the abnormal nozzle. Herein, the amount of ink to be ejected is not changed even if it is specified to increase the amount of liquid in the mask with respect to the ejecting position adjacent in the nozzle row direction to the ejecting position where liquid is not ejected even when the abnormal nozzle is a normal nozzle. Thereby, the recovery process can be performed according to the number of original ejecting positions of the abnormal nozzle. In addition, excessive recovery process can be appropriately prevented from being carried out. Moreover, when the liquid ejecting device is a printing apparatus, the recovery process corresponding to the image to be printed can be more appropriately performed.

According to a further embodiment of the invention, the recovery process is executed by correcting a raster image indicating the ejecting position of the liquid. Herein, the raster image indicating the ejecting position of the liquid is a raster image generated by a RIP process. Herein, the control unit is configured to cause each of the nozzles of the inkjet head to eject the liquid based on a raster image indicating the ejecting position of the liquid. Then, when an abnormal nozzle is present, the control unit is configured to correct the raster image based on the mask, and to cause each of the nozzles to eject the liquid based on the corrected raster image. Thereby, the control unit is configured to cause the other nozzle to eject liquid of a larger amount than at the normal time to some of the ejecting positions where the liquid can be ejected by the other nozzle in the vicinity of the abnormal nozzle at the time of the main scan. Furthermore, the recovery process using the mask can be appropriately performed.

Conventional solutions that are not part of the claimed invention are discussed briefly: As a recovery process when an abnormal nozzle is present, a recovery process using an operation through a multi-pass method has been widely performed conventionally. Herein, the multi-pass method is a method in which the main scan is performed such that a plurality of main scans are performed with respect to each position of a liquid ejecting target. Herein, the sub scan for moving the inkjet head relative to the liquid ejecting target in the sub scanning direction orthogonal to the main scanning direction is performed between the main scans so that the nozzle capable of ejecting liquid to one position can be differed for each main scan. Therefore, conventionally, even when an abnormal nozzle is present, the recovery process can be performed by an alternative process of ejecting liquid using another nozzle in another main scan with respect to the ejecting position corresponding to the abnormal nozzle in each main scan.

However, in the case of a configuration (one-pass configuration) in which only one main scan is performed for each position of the liquid ejecting target, the recovery process by such a conventional method cannot be performed. On the other hand, when configured according to an embodiment of the invention as described above, the recovery process can be performed in one main scan by using a nozzle in the vicinity of the abnormal nozzle. Therefore, the recovery process using the mask according to an embodiment of the invention as described above can be particularly suitably used when only one main scan is performed for each position of the liquid ejecting target. Herein, the scanning driving unit causes the inkjet head to perform the main scan such that one main scan only is performed with respect to each position of the liquid ejecting target.

According to a further embodiment of the invention, a printing apparatus using a cloth medium as a liquid ejecting target can be suitably used as the liquid ejecting device. Herein, the liquid ejected from the inkjet head is an ink used for printing. Herein as well, the ink is ejected from the inkjet head so that an ink dot, which is large to a certain extent, is formed in the main scan. That is, the inkjet head ejects ink from the respective nozzles so that ink dots formed on the medium by the ink ejected from the nozzle adjacent in the nozzle row direction have a size of making contact on the medium. Thereby, the effect of the recovery process performed using a mask can be appropriately enhanced. Furthermore, the recovery process performed using a mask can be more effectively performed.

According to a further embodiment of the invention, a sublimation transfer ink is used as the liquid to be ejected by the liquid ejecting device. Herein, the sublimation transfer ink is a sublimation ink used for transfer. Furthermore, herein, a printing apparatus using a transfer medium as an ejecting target of sublimation transfer ink is used as the liquid ejecting device. Herein, since the ink dots spread during sublimation transfer of transferring the image from the transfer medium to another medium, the ink dots constituting the image after transfer, which becomes the final product, tend to be large dots. Therefore, the effect of the recovery process performed using the mask can be appropriately enhanced.

According to a further embodiment of the invention, an ultraviolet-curable ink is used that cures by irradiation of ultraviolet light as the liquid to be ejected by the liquid ejecting device. Herein, it is particularly advantageous to carry out the recovery process in the same main scan. That is, in a non-claimed example, when the operation of ejecting the liquid in place of the abnormal nozzle would be performed in another main scan, as in the recovery process performed using the operation through the multi-pass method, a change also occurs in the timing at which the liquid lands. When using the ultraviolet-curable ink, when a change occurs in the landing timing, an unintended stripe or the like may be generated due to an influence that a difference occurs in the curing timing between the ultraviolet-curable ink and the surrounding ink in the non-claimed example. Thus, in the present embodiment of the invention, where the ultraviolet-curable ink is used, even if the printing operation itself is performed by the multi-pass method, the recovery process is performed in the same main scan. As a result, the recovery process using the mask as described for the embodiment of the invention is possible also when ultraviolet-curable ink is used.

Further, when printing an image or the like, to what extent it is preferable to perform the recovery process may be different depending on the printing conditions or the image to be printed. Therefore, according to the invention, a plurality of masks are prepared in advance and the mask is selected according to the image to be printed. The liquid ejecting device further includes, a mask storage that stores a plurality of masks different from each other. Then, when an abnormal nozzle is present, the control unit is configured to cause the other nozzle to eject liquid of a larger amount than at the normal time at some of the ejecting positions where the liquid can be ejected by the other nozzle in the vicinity of the abnormal nozzle at the time of the main scan based on one of the masks selected from the plurality of masks. Thereby, the recovery process performed using a mask can be more appropriately performed.

Moreover, masks having different correction intensities are used as the plurality of masks. Herein, the difference in correction intensity means that, the amounts of ink to be increased with respect to other nozzles in the vicinity of the abnormal nozzle are different from each other. Herein, the mask selection is performed automatically.

Furthermore, when a printing apparatus for printing an image is used as a liquid ejecting device, a plurality of masks each associated with different image densities are stored in the mask storage. Herein, the image density is, for example, the color strength in the image to be printed. The image density can also be considered as, for example, a concentration corresponding to the density of ink (liquid) dots formed on the medium at the time of printing. Then, when an abnormal nozzle is present, the control unit selects one of the masks from the plurality of masks based on the image density of an image to be printed. Then, the other nozzle is caused to eject liquid of a larger amount than at the normal time at some of the ejecting positions where the liquid can be ejected by the other nozzle in the vicinity of the abnormal nozzle at the time of the main scan based on the selected mask. Thereby, the recovery process can be more appropriately performed in accordance with the image to be printed.

The invention also provides a liquid ejecting method according to claim 7. In this case as well, effects similar to the above can be obtained.

According to the present invention, the influence of the presence of an abnormal nozzle can be more appropriately suppressed.

### BRIEF DESCRIPTION OF THE DRAWINGS

FIG. 1 is a view describing a printing apparatus 10 according to one embodiment of the present invention. FIG. 1A shows a configuration of a main part of the printing apparatus 10. FIG. 1B shows a configuration of a head unit 12 in the printing apparatus 10.
FIG. 2 is a view describing a recovery process performed in the present embodiment of the invention. FIG. 2A shows a volume of ink that can be ejected from the nozzles in the inkjet head 102 for each color. FIGs. 2B to 2D are views specifically showing an example of the recovery process performed in the present embodiment of the invention.
FIG. 3 is a view describing the size of ink dots in more detail. FIG. 3A is a view showing sizes of the ink dots. FIG. 3B shows an example of the arrangement of ink dots formed when the recovery process is performed.
FIG. 4 is a view describing the recovery process performed in the present embodiment of the invention in more detail. FIG. 4A shows an example of a mask used in the recovery process of the present embodiment of the invention. FIGs. 4B and 4C show an example of the application result of a mask.
FIG. 5 is a flowchart showing a printing operation performed by the printing apparatus 10.

### DETAILED DESCRIPTION OF EMBODIMENTS

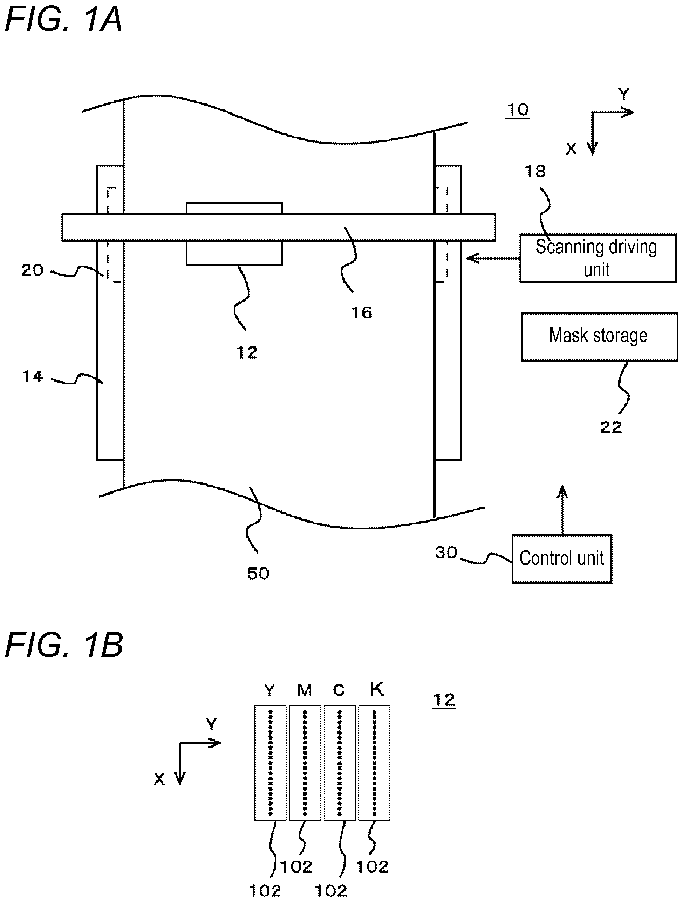

Hereinafter, an embodiment according to the present invention will be described with reference to the drawings. FIG. 1 is a view describing a printing apparatus 10 according to one embodiment of the present invention. FIG. 1A shows a configuration of a main part of the printing apparatus 10. FIG. 1B shows a configuration of a head unit 12 in the printing apparatus 10. Note that, except for the points described below, the printing apparatus 10 has features same as or similar to the known inkjet printers. The printing apparatus 10 further has a configuration same as or similar to a known inkjet printer, in addition to the configuration described below.

The printing apparatus 10 is a liquid ejecting device that ejects liquid through an inkjet method, and performs printing through the inkjet method on a medium 50 to be printed (medium). The medium 50 is an ink ejecting target. Furthermore, the ink is liquid ejected from an inkjet head. The inkjet head is an ejection head that ejects liquid through an inkjet method. The ink is a functional liquid or the like ejected by a liquid ejecting device. More specifically, in the present embodiment, the printing apparatus 10 is an inkjet printer (textile printer) that uses the cloth medium 50 as an ink ejecting target, and includes a head unit 12, a platen 14, a guide rail 16, a heater 20, a scanning driving unit 18, a mask storage 22, and a control unit 30. The cloth medium 50 is, for example, fabric, various types of cloth products and the like. As the cloth medium 50, a medium 50 same as or similar to the medium 50 used as a printing target in a known textile printer can be suitably used.

The head unit 12 is a portion that ejects the ink to the medium 50, and includes a plurality of inkjet heads 102, as shown in FIG. 1B. Herein, each inkjet head 102 is an inkjet head that ejects the ink of each color used for printing. Each of the plurality of inkjet heads 102 includes a nozzle row in which a plurality of nozzles for ejecting ink onto the medium 50 are arranged, and ejects inks having different colors from each other. Furthermore, the plurality of nozzles in each of the inkjet heads 102 are lined up at their positions in a predetermined nozzle row direction that are shifted from one another. When referring to arranging with their positions in a nozzle row direction that are shifted from one another, this means, that the positions are shifted from one another when focusing only on the positions in the nozzle row direction and ignoring the positions in a direction orthogonal to the nozzle row direction. More specifically, in the present embodiment, the nozzle row direction is a direction parallel to the sub scanning direction (X direction in the figure) set in advance in the printing apparatus 10. Furthermore, in each of the inkjet heads 102, the plurality of nozzles form a nozzle row by being arranged so that the intervals in the sub scanning direction become constant.

In the present embodiment, the head unit 12 includes the plurality of inkjet heads 102, each of which ejects ink of each color of yellow (Y), magenta (M), cyan (C), and black (K). As shown in the figure, the plurality of inkjet heads 102 are arranged side by side in a main scanning direction (Y direction in the figure) orthogonal to the sub scanning direction with the positions in the sub scanning direction aligned. The main scanning direction is a direction intersecting the nozzle row. Furthermore, in the head unit 12, a plurality of inkjet heads 102 are held by a carriage (not shown). Moreover, in the present embodiment, an evaporation-drying type ink which is an ink that fixes to the medium 50 by evaporating the solvent is used as the ink of each color. In addition, as the inkjet head 102 for each color, an inkjet head that can change the volume of ink to be ejected from a nozzle in a plurality of levels is used. The feature that the volume of ink can be changed will be described in more detail later.

The platen 14 is a table-shaped member that supports the medium 50 at a position facing the head unit 12. The guide rail 16 is a rail-like member extending in the main scanning direction, and guides the movement of the head unit 12 in the main scanning direction. The heater 20 is a heating means for evaporating the solvent in the ink. In the present embodiment, the heater 20 is disposed in the platen 14 at a position facing the head unit 12 with the medium 50 therebetween, and volatilizes and removes the solvent in the ink by heating the medium 50.

The scanning driving unit 18 is a driving unit that causes the head unit 12 to perform a scanning operation of relatively moving with respect to the medium 50. Herein, causing the head unit 12 to perform a scanning operation means causing the respective inkjet heads 102 of the head unit 12 to perform a scanning operation. Furthermore, in the present embodiment, the scanning driving unit 18 causes the head unit 12 to perform the main scan and the sub scan. Herein, the main scan is an operation (scanning operation) of ejecting ink while moving in the main scanning direction. Furthermore, at the time of the main scan, the scanning driving unit 18 moves the head unit 12 along the guide rail 16. Moreover, regarding the main scan, the movement of the head unit 12 in the main scanning direction is a relative movement with respect to the medium 50. Therefore, in a modified example of the printing apparatus 10 of the present embodiment, the medium 50 side may be moved by fixing the position of the head unit 12, and moving the platen 14.

Furthermore, the sub scan is an operation that moves relative to the medium 50 in the sub scanning direction. In the present embodiment, the scanning driving unit 18 causes the head unit 12 to perform the sub scan by conveying the medium 50 in the conveyance direction parallel to the sub scanning direction using a roller (not shown). Furthermore, the medium 50 is conveyed by a preset feed amount between each main scan. Moreover, in the present embodiment, the printing apparatus 10 executes the printing operation through the serial method by causing the head unit 12 to perform the main scan and the sub scan.
Herein, the printing operation is performed by the one-pass operation of setting the pass number to one. The pass number is the number of main scans performed on the same position on the medium 50. Furthermore, the operation of one pass is an operation in a configuration in which only one main scan is performed with respect to each position of the medium 50.

The mask storage 22 is a storage means that stores a mask used in the recovery process. The recovery process is a process for suppressing the influence of the presence of an abnormal nozzle when an abnormal nozzle is present. Furthermore, the abnormal nozzle is a nozzle whose ejection characteristic is abnormal. The abnormal nozzle is a nozzle whose ejection characteristic is deviated from a preset normal range. In addition, in the present embodiment, the mask storage 22 stores a plurality of masks different from each other. The recovery process performed using the mask will be described in more detail later.

The control unit 30 is, a CPU of the printing apparatus 10, and controls the operation of each unit of the printing apparatus 10. More specifically, the printing apparatus 10 causes each nozzle in the head unit 12 to eject ink according to an image to be printed at the time of control of the main scan by the head unit 12. Furthermore, as will be described in more detail later, in the present embodiment, the printing apparatus 10 further performs control of recovery process and the like performed using a mask. Accordingly, various images can be appropriately printed by the printing apparatus 10.

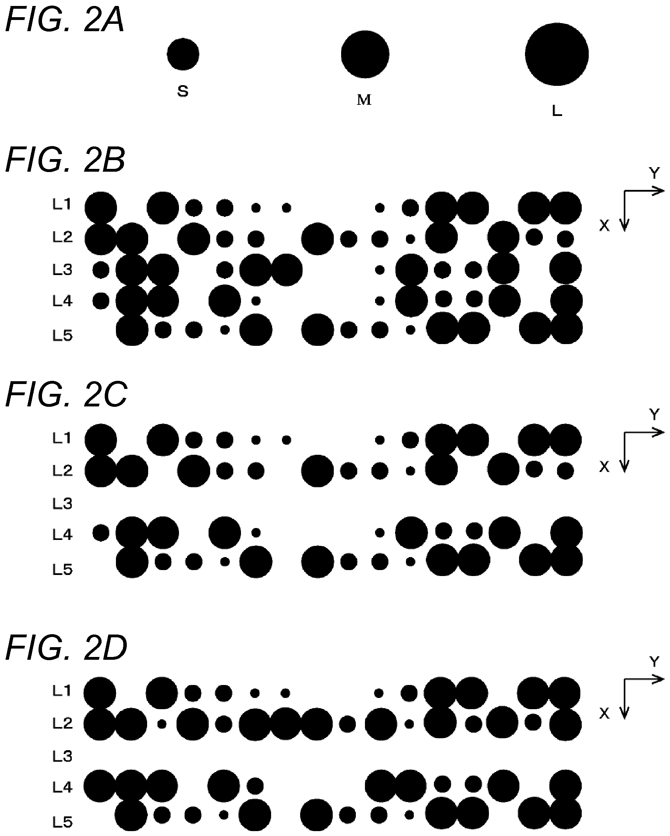

Subsequently, the recovery process performed in the present embodiment will be described. FIG. 2 is a view describing the recovery process performed in the present embodiment. FIG. 2A shows the volume of ink that can be ejected from the nozzles in the inkjet head 102 (see FIG. 1) for each color. As described above, in the present embodiment, an inkjet head capable of changing the volume of the ink to be ejected from the nozzle in a plurality of levels is used as the inkjet head 102 for each color. More specifically, in the present embodiment, the inkjet head 102 can eject the ink from each of the nozzles with three types of volumes of S (small), M (medium), and L (large) as shown in the figure. Herein, four types of values (four values) can be represented by one nozzle by including a state in which ink is not ejected from the nozzle. Furthermore, as such an inkjet head 102, a known inkjet head (multi-valued head) in which the volume of ink can be varied in a plurality of levels can be suitably used.

Furthermore, in the present embodiment, the recovery process is performed using such a feature that the volume of ink can be changed. More specifically, when one of the nozzles in any one of the inkjet heads 102 is an abnormal nozzle, the control unit 30 (see FIG. 1) controls the operation of the scanning driving unit 18 (see FIG. 1) so that the main scan is performed without using the abnormal nozzle. According to the embodiment of the invention, a nozzle that is arranged adjacent (immediately next) to the abnormal nozzle in the nozzle row direction is caused to eject an amount of ink larger than that in the normal time when no abnormal nozzle is present, thereby suppressing the influence that may occur when the abnormal noise is caused not to eject ink. Thereby, the ink can be ejected by the other nozzles in place of the abnormal nozzle by increasing the ejection amount of the other nozzles other than the abnormal nozzle. Thus, the recovery process can be appropriately performed in a case in which an abnormal nozzle is present.

FIGs. 2B to 2D are views specifically showing an example of the recovery process performed in the present embodiment of the invention. In FIGs. 2B to 2D, the ink dots are shown somewhat smaller in order to reduce the overlapping of the ink dots and to make it easy to identify the individual ink dots. The size of the ink dots will be described in more detail later.

Furthermore, among FIGs. 2B to 2D, FIG. 2B shows one example of the arrangement of ink dots formed at the normal time when an abnormal nozzle is not present. In the figure, the ink dots arranged in the main scanning direction (Y direction) are dots formed by one nozzle in one inkjet head 102. Furthermore, the arrangement of ink dots arranged in the main scanning direction are dots formed by one nozzle in one main scan. In each main scan, each nozzle of each inkjet head 102 forms a plurality of ink dots arranged in the main scanning direction by ejecting ink to an ejecting position set in advance according to the image to be printed. Herein, the ink of any one volume of S, M, or L is ejected to each ejecting position where the ink is to be ejected. Furthermore, in the figure, characters L1 to L5 indicate five lines arranged in the sub scanning direction. In this case, a line is a line formed by a plurality of ink dots arranged in the main scanning direction. Moreover, as can be understood from the above description, each line corresponds to each of the five nozzles arranged continuously in the nozzle row direction parallel to the sub scanning direction (X direction).

Furthermore, FIG. 2C shows one example of the arrangement of ink dots formed in a non-claimed case when the recovery process is not performed when an abnormal nozzle is present. Moreover, in the illustrated case, an example of the arrangement of ink dots is shown for the case where the nozzle corresponding to the line denoted with the character L3 is a non-ejection nozzle that does not eject ink. Herein, as shown in the figure, a state in which the dots constituting the line denoted with the character L3 (hereinafter referred to as the line of L3) are removed from the arrangement of ink dots shown in FIG. 2B is obtained. Furthermore, in this case, as one line disappears, streaky portions (white stripes) in which the amount of ink runs short occurs in the printing result, and the printing quality may be lower.

On the other hand, FIG. 2D shows one example of the arrangement of ink dots formed when the recovery process is performed according to the present embodiment. Herein, as well, the line of L3 is not formed as in the case shown in FIG. 2C. However, for some lines other than the line of L3, the influence of the disappearance of the line of L3 is reduced by increasing the amount of ink constituting the line than in the normal time. More specifically, in the case shown in FIG. 2D, the volume of ink to be ejected to a part of ejecting position is made larger than at the normal time for the line of L2 and the line of L4 (line denoted with L2 and L4 in the figure), which are lines adjacent to the line of L3. According to this configuration, when an abnormal nozzle is present, the abnormal nozzle may not eject ink and the amount of ink ejected at the time of the main scan by the other nozzles in the vicinity of the abnormal nozzle can be made larger than at the normal time. Thus, the influence of the disappearance of the line of L3 can be reduced, and the recovery process can be appropriately performed.

Here, as described above, in FIGs. 2B to 2D, the ink dots are illustrated slightly smaller. Therefore, in FIG. 2D, an impression may be given as if the effect of the recovery process is small. However, when the actual ink dot size is taken into consideration, the recovery process can be appropriately performed by performing as described above.

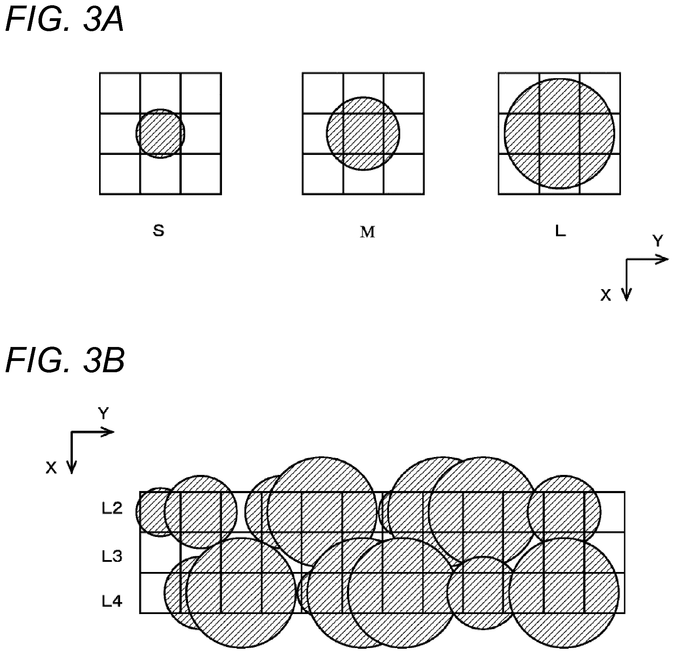

FIG. 3 is a view describing the size of ink dots in more detail. FIG. 3A is a view showing the sizes of the ink dots, and shows the relationship between the resolution of printing and the ink dots of three types of sizes of S, M and L. Herein, the three types of sizes of S, M, and L refer to the sizes of ink dots formed by the respective volumes of three types of S, M, and L. The relationship with the resolution of printing is the relationship with the interval of the ejecting position set according to the resolution of printing. In FIG. 3A, the nine squares shown in the background of ink dots of each size indicate the ejecting positions set according to the resolution. Furthermore, among these squares, the central square indicates an ejecting position at which ink is ejected at the time of forming each dot. Moreover, squares other than the central square indicate the ejecting positions around the ejecting position corresponding to the central square. In addition, in the present embodiment, as can be seen from the sizes of the dots shown in the figure, a dot having a size that comes into contact with the ink dot formed at the adjacent ejecting position is formed as the ink dot of each size. In this case, the adjacent ejecting position is an ejecting position adjacent in each of the main scanning direction and sub scanning direction.

As is apparent from the recovery process method described above with reference to FIG. 2D, in the present embodiment, it is important that at least dots of L size have a size that contacts the ink dot at the adjacent ejecting position in the sub scanning direction parallel to the nozzle row direction. Furthermore, it is preferable that the dots of M size and S size also have such a size. Moreover, the inkjet head 102 (see FIG. 1) for each color, ejects ink from the respective nozzles so that ink dots formed on the medium 50 by the ink ejected from the nozzle adjacent in the nozzle row direction have a size of making contact on the medium 50.

FIG. 3B is a view showing an example of the arrangement of ink dots formed when the recovery process is performed, and shows the result of performing the recovery process in a manner same as or similar to the case described with reference to FIG. 2D while reflecting the size of the ink dots shown in FIG. 3A. As shown in the figure, according to the present embodiment, the recovery process can be appropriately performed when an abnormal nozzle is present.

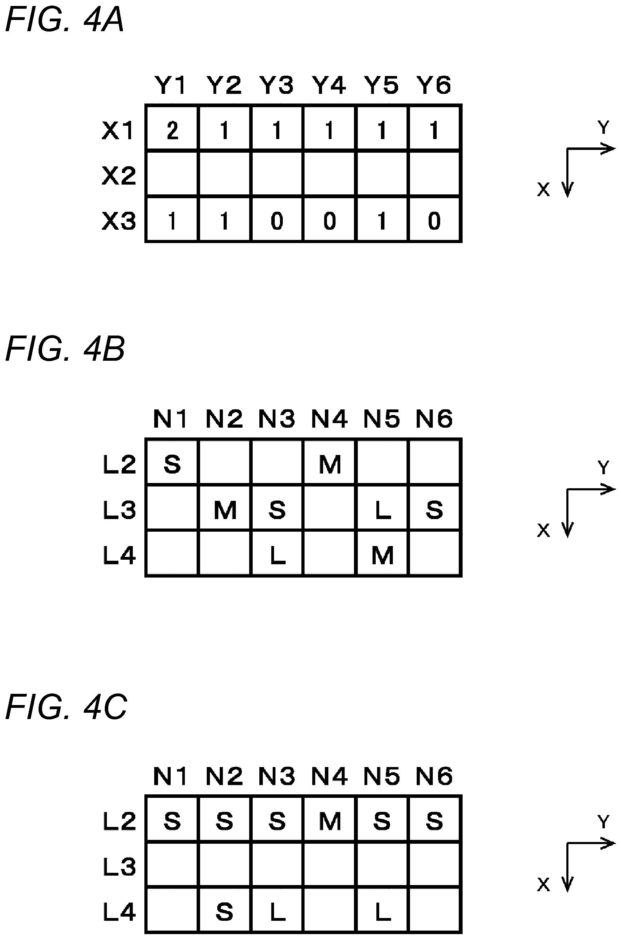

Now, the recovery process performed in the present embodiment will be described in more detail. FIG. 4 is a view describing the recovery process performed in the present embodiment in more detail. When the volume of ink ejected to a part of ejecting positions by nozzles other than the abnormal nozzle is made larger than that in the normal time as in the recovery process performed in the present embodiment, ideally, the volume of ink would be preferably changed so as to match as accurately as possible to the original ejection amount by the abnormal nozzle. The original ejection amount at the abnormal nozzle is the amount of ink ejected when the abnormal nozzle is normal. However, when the recovery process would be performed in this manner, for example, the time required for the calculation may become long due to the increase in the required calculation amount, which may affect the printing speed. Furthermore, in a case where a configuration capable of high-speed calculation is used, the cost of the device may greatly rise. On the other hand, in the present embodiment, in order to prevent the occurrence of such a problem, the recovery process is performed using the mask, as described above.

FIG. 4A shows an example of a mask used in the recovery process of the present embodiment. As described above, in the present embodiment, the recovery process is performed by changing the ejection amount of the ink by the other nozzles in the vicinity of the abnormal nozzle. Furthermore, in this case, a nozzle adjacent to the abnormal nozzle in the nozzle row direction serves as the other nozzles. More specifically, FIG. 4A illustrates an example of the mask in a case where the recovery process is performed using nozzles adjacent to the abnormal nozzle on both sides in the nozzle row direction. Furthermore, in FIG. 4A, characters X1 to X3 indicate three nozzles continuously arranged in the nozzle row direction. Moreover, among these, the central character X2 indicates an abnormal nozzle to be subjected to recovery process. The characters X1 and X3 indicate nozzles adjacent to the abnormal nozzle in the nozzle row direction.

Furthermore, in FIG. 4A, characters Y1 to Y6 indicate a plurality of ejecting positions continuously arranged in the main scanning direction. The plurality of ejecting positions that are continuously arranged in the main scanning direction are a plurality of ejecting positions that are continuously arranged, which are formed by ejecting ink by one nozzle in one main scan. Furthermore, the ejecting position formed by ejecting ink is a position to which the ink is ejected as needed according to the image to be printed. Moreover, as also described above, in the present embodiment, the printing apparatus 10 (see FIG. 1) executes the printing operation in a one-pass operation. Herein, the characters Y1 to Y6 indicate a plurality of positions arranged in the main scanning direction at intervals corresponding to the printing resolution.

Herein, each of the squares aligned in a matrix indicates the ejecting position to which each nozzle ejects the ink at the time of the main scan. Furthermore, in the figure, the numbers in the squares indicate the ejection amount to be increased at each ejecting position as compared to the normal time with respect to the other nozzles (nozzles used for recovery) other than the abnormal nozzle. More specifically, in the present embodiment, the number of levels by which the ejection amount is increased is specified as the ejection amount to be increased at the ejecting position for increasing the ejection amount of the ink. The level number of the ejection amount is a number indicating the level in the volume of ink of a plurality of levels that can be ejected from each nozzle.

That is, at the ejecting position where the number 2 is specified, the volume of the ink to be ejected is increased by two levels. If the volume of the ink to be ejected at the ejecting position before application of the mask is the dot of S size (S dot), the volume of the ink is increased by two levels by the application of the mask to be set to the volume of the dot (L dot) of L size. Furthermore, in the case of an ejecting position where ink is not ejected before the application of the mask, the volume of the ink is increased by two levels by the application of the mask to be set to the volume of the dot of M size (M dot). Moreover, in the present embodiment, if the ink volume exceeds the L dot when increased by two levels, the volume of ink after the application of the mask is set to the volume of L dot. Thus, when the volume of ink before the application of the mask is M dot or L dot, the volume of ink after the application of the mask is set to the volume of L dot.

In addition, at the ejecting position where the number 1 is specified, the volume of the ink to be ejected is increased by one level. If the volume of the ink before the application of the mask is the volume of S dot, the volume of ink after the application of the mask is set to the volume of M dot. When the volume of ink before the application of the mask is M dot or L dot, the volume of ink after the application of the mask is set to the volume of L dot. Furthermore, in the case of an ejecting position where ink is not ejected before the application of the mask, the volume of the ink is increased by one level by the application of the mask to be set to the volume of S dot. Furthermore, the ejecting position where the number 0 is specified is an ejecting position where the volume of ink is not changed. In this case, the same volume as that before the application of the mask is set as the volume of ink after the application of the mask.

Furthermore, with regard to the matters described above in relation to the mask, the mask used in the present embodiment is data specifying ejecting positions at which the ejection amount of ink is increased and the ejection amount to be increased at the ejecting positions. Herein, the ejection amount to be increased at the ejecting position is determined in consideration of the degree of influence on the ejecting position corresponding to the abnormal nozzle. Herein, the degree of influence on the ejecting position corresponding to the abnormal nozzle is the magnitude of influence determined according to the range covering the ejecting position of the abnormal nozzle, for when ink dots of various sizes are formed by the nozzles adjacent to the abnormal nozzle. Furthermore, as shown in the figure, in the mask of the present embodiment, as indicated by using characters Y1 to Y6 in the figure, the ejecting position to increase the ejection amount of ink and the number of levels to increase the ejection amount are specified for a preset number of ejecting positions lined up in the main scanning direction. On the other hand, at the time of the main scan, the ink is usually ejected to more ejecting positions than the ejecting positions lined up in the main scanning direction in the mask. Therefore, in the present embodiment, when applying the mask, the mask is applied to the respective ejecting positions to eject ink at the time of each main scan by periodically applying the mask with respect to the main scanning direction. In addition, when performing the recovery process using such a mask, the operation of the control unit 30 (see FIG. 1), is an operation for causing the adjacent nozzle to eject ink of a larger amount than at the normal time at some of the ejecting positions where the ink can be ejected at the time of the main scan by the nozzle adjacent to the abnormal nozzle based on the mask described above. Herein, the nozzle adjacent to the abnormal nozzle is another nozzle in the vicinity of the abnormal nozzle. Furthermore, the volume of the ink to be ejected is made larger than at the normal time for a part of ejecting positions where ink is ejected by the nozzle adjacent to the abnormal nozzle by increasing the ejection amount according to the number of levels specified in the mask. Furthermore, the manner of applying the mask is an operation of periodically applying a mask for each size (preset number mentioned above) of the mask in the main scanning direction with respect to the arrangement of ejecting positions where ink is ejected by the nozzles adjacent to the abnormal nozzle.

FIGs. 4B and 4C show an example of the application result of the mask according to Fig. 4A. FIG. 4B is a view showing the volume of ink to be ejected to each ejecting position before application of the mask, and shows an example of the volume of ink to be ejected to the ejecting positions indicated by characters N1 to N6 in the figure for three consecutive nozzles indicated by characters L2 to L4 in the figure (three nozzles continuously arranged in the nozzle row direction). The contents shown in FIG. 4B are part of data (image data) indicating an image before application of the mask. Furthermore, in FIG. 4B, the volume of ink specified for each ejecting position is the volume of ink when there is no abnormal nozzle in the above three nozzles. Furthermore, the ejecting positions indicated by the characters N1 to N6 are the ejecting positions in one main scan. Moreover, FIG. 4C is a view showing the volume of ink to be ejected to each ejecting position after application of the mask, and shows the result of applying the mask shown in FIG. 4A for a case in which the nozzle indicated by the character L3 is an abnormal nozzle, and the volume of ink at each ejecting position is set as shown in FIG. 4B. The contents shown in FIG. 4C are part of data (recovery data) indicating an image in a state after the recovery process has been performed.

Here, the description has been omitted above, but in the present embodiment, when applying the mask, the contents of the mask are not reflected on all the ejecting positions, and the contents of the mask are reflected in accordance with the original ejecting position by the abnormal nozzle. The original ejecting position by the abnormal nozzle is a position where the ink should have been ejected when the abnormal nozzle is a normal nozzle. Furthermore, in FIG. 4B, among the ejecting positions corresponding to the nozzle indicated by the character L3, the ejecting positions indicated by the characters N2, N3, N5, and N6 are the original ejecting positions. Then, the contents of the mask are reflected only on the ejecting position adjacent in the nozzle row direction to the original ejecting position by the abnormal nozzle, and the ejection amount of the ink is increased. Herein, to increase the ejection amount of ink by reflecting the contents of the mask means to increase the ejection amount of ink when a value greater than or equal to one is set as the value corresponding to the relevant ejecting position in the mask. That is, when an abnormal nozzle is present, the control unit 30 sets the amount of ink to be ejected to be larger than at the normal time based on the mask only with respect to the ejecting position adjacent in the nozzle row direction to the ejecting position where ink is ejected when the abnormal nozzle is a normal nozzle among the ejecting positions where the nozzles adjacent to the abnormal nozzle eject ink.

Furthermore, in the case shown in the figure, as described above, among the ejecting positions corresponding to the nozzle indicated by the character L3 which is the abnormal nozzle, the ejecting positions indicated by the characters N2, N3, N5 and N6 become the original ejecting positions. Therefore, only the ejecting positions indicated by the characters N2, N3, N5, and N6 are the ejecting positions whose values are changed by the mask even for the ejecting positions corresponding to the nozzles indicated by the characters L1 and L3, which are nozzles adjacent to the abnormal nozzle. Therefore, as shown in the figure, the volume of ink does not change between before and after the application of the mask for the ejecting positions corresponding to the characters N1 and N4 among the ejecting positions corresponding to the nozzle indicated by the character L2.

In this regard, in a non-claimed comparative example of applying the mask, the result of performing an excessive recovery process may be obtained by performing a uniform recovery process when the original ejecting position by the abnormal nozzle is not taken into consideration, for example when printing an image in which printing is performed with hardly using the nozzle corresponding to the abnormal nozzle. On the other hand, in the present embodiment of the invention, the amount of ink to be ejected is not changed even if it is specified to increase the amount of ink in the mask with respect to the ejecting position adjacent in the nozzle row direction to the ejecting position where ink is not ejected even when the abnormal nozzle is a normal nozzle. Therefore, according to the present embodiment, the recovery process is performed in accordance with the number of original ejecting positions in the abnormal nozzle. Furthermore, this makes it possible to appropriately prevent excessive recovery process from being performed, and more appropriately perform the recovery process in accordance with the image to be printed.

As described above, according to the present embodiment, with respect to some of the ejecting positions where ink can be ejected at the time of the main scan by the nozzle adjacent to the abnormal nozzle based on the mask, a larger amount of liquid than at the normal time can be ejected. Thus, the recovery process performed using a mask can be appropriately performed. Furthermore, the recovery process can be easily and appropriately performed without performing many calculations by specifying ejecting positions at which the ejection amount of ink by other nozzles other than the abnormal nozzle is increased and the ejection amount (increase amount of ink) to be increased at these ejecting positions in the mask. Therefore, according to this embodiment, when an abnormal nozzle is present, the influence of the presence of the abnormal nozzle can be appropriately suppressed.

When printing an image or the like, the extent to which the recovery process is preferably performed differs depending on the printing conditions and the image to be printed. In the present embodiment, as described above, the mask storage 22 (see FIG. 1) of the printing apparatus 10 is used to store a plurality of masks different from each other. With this configuration, a mask can be selected from among a plurality of masks prepared in advance, according to the printing conditions and the image to be printed. Furthermore, the recovery process is executed based on any mask selected from the plurality of masks. According to the embodiment of the invention, masks having different correction intensities are used as the plurality of masks. The difference in correction intensity means that, the amounts of ink to be increased with respect to other nozzles in the vicinity of the abnormal nozzle are different from each other. Furthermore, the amount of ink to be increased is an amount corresponding to the total of the number of levels specified as an amount to increase the ejection amount of the ink in the mask.

The mask selection may be performed automatically or, in a non-claimed example, manually by a user. In the present embodiment, the mask is selected automatically, based on the image density of the image to be printed. In this case, the image density is, for example, the color strength in the image to be printed. The image density can also be, for example, a concentration corresponding to the density of ink dots formed on the medium at the time of printing. Furthermore, as the plurality of masks stored by the mask storage 22, a plurality of masks each associated with different image densities is used. In this case, at the time of execution of the recovery process, the control unit 30 (see FIG. 1) of the printing apparatus 10 selects any mask from the plurality of masks based on the image density of the image to be printed. Then, the recovery process is executed based on the selected mask. With this configuration, the recovery process can be more appropriately performed in accordance with the image to be printed. In a non-claimed example, when selecting the mask manually, for example, it is conceivable to check the result of actually performing the printing and change the mask as necessary.

When printing is performed through the inkjet method as in the printing apparatus 10 of the present embodiment, a raster image is generated as image data indicating an image to be printed by performing a RIP process or the like. Generating a raster image by performing a RIP process and the like means generating a raster image indicating the ink ejecting position at a resolution that matches the resolution of printing by performing a separation process according to the number of colors of ink to be used for printing, conversion of resolution according to the printing resolution, halftone process and the like. Furthermore, as such a raster image, consideration is made to generate a raster image that is the same as or similar to that at the time of printing with a known inkjet printer. In the present embodiment, the mask described above is applied to a raster image generated in this manner. Herein, the recovery process is an operation of correcting a raster image indicating the ink ejecting position.

The control unit 30 causes the respective nozzles of each of the inkjet heads in the head unit 12 (see FIG. 1) to eject the ink based on the raster image indicating the ejecting position of the ink. Furthermore, when an abnormal nozzle is present, the control unit 30 corrects the raster image based on the mask to cause each nozzle to eject ink based on the corrected raster image. Moreover, the recovery process is executed by changing the ejection amount of ink by the nozzle adjacent to the abnormal nozzle at the time of the main scan. According to such a configuration, the recovery process using a mask can be appropriately performed.

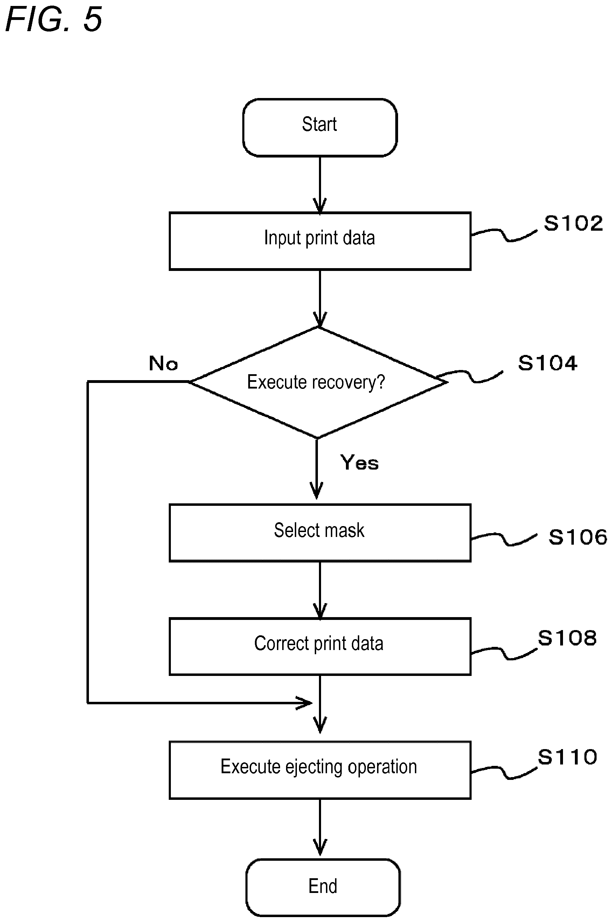

Next, the printing operation performed by the printing apparatus 10 of the present embodiment will be described in more detail. FIG. 5 is a flowchart showing an example of the printing operation performed by the printing apparatus 10. In the printing apparatus 10 of the present embodiment, when the printing operation is performed, print data indicating an image to be printed is first input (S102). It is conceivable to input the data of the raster image described above as the print data. In this case, a host PC that controls the operation of the printing apparatus 10 performs the RIP process to generate a raster image. Furthermore, in a modified example of the operation of the printing apparatus 10, data before the RIP process or the like is performed may be input as the print data. In this case, the control unit 30 of the printing apparatus 10 performs the RIP process and the like to generate the raster image.

Furthermore, after the input of print data, whether or not an abnormal nozzle is present is checked based on information of the abnormal nozzle stored in advance. Moreover, whether or not perform the recovery process is determined (S104). When an abnormal nozzle is present and recovery process is to be performed (S104: Yes), a mask used for the recovery process is selected from the plurality of masks stored in the mask storage 22 (S106). Herein, the mask may be selected automatically according to the embodiment or manually by the user according to a non-claimed example, as described above.

Then, after selecting the mask, the mask is applied to the print data indicating the raster image, so that the print data is corrected to make the volume of ink to be ejected by the nozzle adjacent to the abnormal nozzle larger than that in the normal time without using the abnormal nozzle (S108). Then, the main scan is performed based on the corrected print data to execute the ejecting operation of ejecting the ink from each nozzle of each inkjet head (S110). When determined in step S104 that no abnormal nozzle is present and the recovery process is not to be performed (S104: No), the process proceeds to step S110, and the ejecting operation is executed. According to the present embodiment, the image indicated by the print data can be appropriately printed by the above operations. Furthermore, the recovery process can be appropriately performed in a case where an abnormal nozzle is present.

Next, supplementary description regarding each configuration described above in the present embodiment, description of modified embodiments, and the like will be made. As described above, according to the present embodiment, the recovery process when an abnormal nozzle is present can be appropriately performed. Furthermore, regarding this point, as a recovery process when an abnormal nozzle is present, in a non-claimed conventional case, a recovery process using an operation through a multi-pass method has been widely performed. The multi-pass method is a method in which the main scan is performed such that a plurality of main scans are performed on each position of the medium which is an ink ejecting target. In this case, the nozzles which can eject ink to one position can be differed for each main scan by performing the sub scan between the main scans. Therefore, even when an abnormal nozzle is present, the recovery process can be performed by an alternative non-claimed conventional process of ejecting ink using another nozzle in another main scan with respect to the ejecting position corresponding to the abnormal nozzle in each main scan.

However, when printing is performed by a one-pass operation, such an alternative process of the nozzle cannot be performed, and thus the recovery process cannot be performed through such a method in the non-claimed conventional case. On the other hand, in the present embodiment of the invention, the recovery process is performed in one main scan using a nozzle in the vicinity of the abnormal nozzle. Therefore, according to the present embodiment, even when printing is performed by a one-pass operation, the recovery process can be appropriately performed.

Furthermore, as described above, in the present embodiment, the printing apparatus 10 is a textile printer that uses a cloth medium as an ink ejecting target. In this case, as the ink permeates the medium, the ink dots easily spread on the medium. As a result, the ink dots become large, and the recovery process can be more appropriately performed. However, in a modified embodiment of the printing apparatus 10, printing is performed on a medium other than fabric. Therein as well, the ink is ejected from the inkjet head so that an ink dot, which is large to a certain extent, is formed at the time of the main scan.

Moreover, when printing on fabric and the like, according to one modified embodiment, a method of transferring using a transfer medium, other than the direct printing method of directly printing on a medium, is used. In this case, in the printing apparatus 10, a transfer medium is used as an ink ejecting target. Then, after an image is printed on a transfer medium, the image is transferred to a medium such as fabric to complete an image (image after transfer), which becomes a final product. Herein, a sublimation transfer ink which is a sublimation ink used for transfer is suitably used as the ink. Herein, since the ink dots spread during sublimation transfer of transferring the image from the transfer medium to another medium, the ink dots constituting the image after transfer, which becomes the final product, tend to be large dots. Therefore, the effect of the recovery process performed using the mask can be appropriately enhanced.

Furthermore, as described above, in the present embodiment, the mask storage 22 stores a plurality of masks different from each other. Moreover, a plurality of masks each associated with different image densities are used as the plurality of masks. According to a modified embodiment, a plurality of masks corresponding to a plurality of image densities including at least a low image density of less than or equal to 20%, an intermediate image density of about 40 to 60%, and a high image density of greater than or equal to 80% such as an image density of 20%, 40%, 60%, 80% and 100% are used. Furthermore, at the time of the execution of the recovery process, according to one variant, one mask is selected for one image based on the image density in the entire image to be printed. In this case, the image density in the entire image is the average image density in the entire image. Further, in order to perform a more accurate recovery process, in another variant, a plurality of masks are selected for one image, and the masks are switched for each part of the image. Herein, a mask is selected corresponding to each part according to the image density of each part of the image. Furthermore, in one variant, a line drawn by one nozzle in one main scan is used as each part of the image. Herein, the line drawn by one nozzle is, for example, a line which should have been drawn when the abnormal nozzle is a normal nozzle. Alternatively, in another variant, the image density may be calculated for each part of a preset length in one line, not for the entire line, and the mask may be switched for each part. Thereby, the recovery process with higher accuracy can be appropriately performed.

Furthermore, in the above description of the embodiment, a case where the operation in one pass is performed has been mainly described regarding the operation of the printing apparatus 10. However, in a modified embodiment of the printing apparatus 10, printing through a multi-pass method is performed. Therein as well, the recovery process can be appropriately performed using the mask described above. Moreover, when printing through a multi-pass method is performed, it is conceivable to use an ultraviolet-curable ink and the like, which cures by irradiation of an ultraviolet-ray as an ink. Herein, the recovery process is advantageously performed through the method of the present embodiment, instead of the conventional recovery process using the operation through the multi-path method. That is, in the conventional non-claimed case, when the operation of ejecting ink in place of the abnormal nozzle is performed in another main scan as in the recovery process performed using the operation through the multi-pass method, a change may occur also in the timing at which the ink lands. In addition, in the case of using the ultraviolet-curable ink, when a change occurs in the landing timing, an unintended stripe or the like may be generated due to an influence that a difference occurs in the curing timing between the ultraviolet-curable ink and the surrounding ink. Thus, according to the embodiment of the invention, also in the case of using the ultraviolet-curable ink, in order to prevent the occurrence of such stripes and the like, even if the printing operation itself is performed through the multi-pass method, the recovery process is performed in the same main scan. Therefore, in the case of using the ultraviolet-curable ink, it is particularly preferable to perform the recovery process according to the embodiment of the invention.

Furthermore, as described above, in the present embodiment, the printing apparatus 10 performs the printing operation through the serial method. However, in a modified example of the printing apparatus 10, the printing apparatus 10 performs the printing operation through the line method. Herein, the printing operation through the line method is an operation of performing printing using an inkjet head capable of simultaneously ejecting ink to the entire width direction of the printing range in a medium. Furthermore, the printing operation through the line method can also be an operation in which printing is performed by performing only the scanning operation corresponding to the main scan, instead of performing the main scan and the sub scan. Herein, the operation of ejecting ink from the inkjet head while moving the inkjet head relative to the medium by conveying the medium constitutes a main scan.

Furthermore, various modified embodiments may be considered for the configuration of the printing apparatus 10. That is, a part of the process performed by the control unit 30 of the printing apparatus 10 may be performed by a computer or the like external to the printing apparatus 10. Furthermore, a storage device external to the printing apparatus 10 may be used as the mask storage 22. In these cases, in line with the invention as defined in claim 1, the printing system including the device external to the printing apparatus 10 is the liquid ejecting device.

Furthermore, as described above, in the present embodiment, the printing apparatus 10 is an inkjet printer that draws a two-dimensional image on the medium by ejecting the ink to the medium. However, in a modified example of the printing apparatus 10, as the printing apparatus 10, a 3D printer (3D printing apparatus, shaping device) is used that shapes a stereoscopic shaped object. Furthermore, a shaping table that supports a shaped object being shaped and a shaped object being shaped can be considered as objects to which the ink is to be ejected. Herein as well, the influence of the presence of an abnormal nozzle can be more appropriately suppressed by performing the recovery process according to the invention. In this case, the 3D printer is the liquid ejecting device.

### INDUSTRIAL APPLICABILITY

The disclosed invention can be suitably applied in a printing apparatus.

## Claims

1. A liquid ejecting device (10) that is configured to eject a liquid through an inkjet method, the liquid ejecting device (10) being a printing apparatus that is configured to print an image, the liquid being an ink used for printing, the liquid ejecting device (10) comprising:
a mask storage that stores a plurality of masks that are different from each other,
an inkjet head (102) including a plurality of nozzles (X1, X2, X3) lined up at constant intervals in a predetermined nozzle row direction;
a scanning driving unit (18) configured to cause the inkjet head (102) to perform a main scan of ejecting the liquid while moving in a main scanning direction intersecting the nozzle row direction, relative to a liquid ejecting target; and
a control unit (30) configured to control operation of the inkjet head (102) and the scanning driving unit (18),
wherein, when an abnormal nozzle (X2) is present, the abnormal nozzle (X2) being a nozzle having an abnormal ejection characteristic that deviates from a preset normal range:
the control unit (30) is configured to cause the abnormal nozzle (X2) not to eject the liquid and to cause another nozzle (X1, X3) that is adjacent to and immediately next to the abnormal nozzle (X2) in the nozzle row direction in the same main scan to eject, in the same main scan, liquid of a larger amount than at a normal time when no abnormal nozzle (X2) is present only at ejecting positions immediately adjacent in the nozzle row direction to ejecting positions of the abnormal nozzle (X2) where ink should have been ejected if the abnormal nozzle (X2) was a normal nozzle and where the liquid of the larger amount is ejectable by the other nozzle (X1, X3) in the same main scan, and
the control unit (30) is configured to control the operation of the inkjet head (102) so as to cause the other nozzle (X1, X3) to eject liquid of a larger amount or not to eject liquid of a larger amount when the abnormal nozzle (X2) is present based on a mask that is prepared in advance without consideration for a specific image to be printed and is a selected one of the plurality of masks stored in the mask storage, the respective mask being data specifying ejecting positions at which the ejection amount of the liquid is increased and ejection amounts to be increased at the ejecting positions so that an amount of the liquid to be ejected at a time of the main scan by the other nozzle (X1, X3) becomes larger than at the normal time,
wherein the inkjet head (102) changes a volume of the liquid to be ejected from the nozzle in a plurality of levels; and
the respective mask specifies the number of levels by which the ejection amount is increased at an ejecting position where an ejection amount of the liquid is to be increased,
wherein the respective mask specifies, for a preset number of a plurality of ejecting positions lined up in the main scanning direction, ejecting positions at which the ejection amount of the liquid is to be increased and a plurality of different levels by which the ejecting amount is to be increased, and when an abnormal nozzle (X2) is present, the control unit (30) is configured to periodically apply the selected one of the plurality of masks for every preset number of ejecting positions for ejecting the liquid by the adjacent nozzle,
wherein the respective mask has a length in the main scanning direction corresponding to the preset number of ejecting positions lined up in the main scanning direction and a width in the nozzle row direction corresponding to the abnormal nozzle (X2) and the immediately adjacent other nozzle (X1, X3) before and/or after the abnormal nozzle (X2),
wherein the plurality of masks stored in the mask storage are associated with different correction intensities; and
when the abnormal nozzle (X2) is present, the control unit (30) is configured to select, in advance, the selected one of the masks from the plurality of masks based exclusively on an image density of an image to be printed,
wherein as the image density, an average image density is calculated for the entire image to be printed, or
respective average image densities are calculated for respective parts of the image to be printed and a respective one of the masks is selected corresponding to each of the parts according to the average image density of each of the parts,
wherein the content of the mask is not reflected on those ejecting positions of the other nozzle (X1, X3) which are adjacent to and immediately next to ejecting positions of the abnormal nozzle (X2) in the nozzle row direction where the ink should not have been ejected if the abnormal nozzle was a normal nozzle.

2. The liquid ejecting device (10) according to claim 1, wherein
the control unit (30) is configured to cause each of the nozzles of the inkjet head (102) to eject the liquid based on a raster image indicating ejecting positions of the liquid, and
when an abnormal nozzle (X2) is present, the control unit (30) is configured to correct the raster image based on the mask, and to cause each of the nozzles to eject the liquid based on the corrected raster image.

3. The liquid ejecting device (10) according to any one of claims 1 or 2, wherein the scanning driving unit (18) is configured to cause the inkjet head (102) to perform the main scan so as to perform one main scan only with respect to each position of the liquid ejecting target.

4. The liquid ejecting device (10) according to any one of claims 1 to 3, wherein
the liquid ejecting device (10) is a printing apparatus that uses a cloth medium as a liquid ejecting target,
the liquid is an ink used for printing, and
in the main scan, the inkjet head (102) is configured to eject ink from each of the nozzles so that ink dots formed on the medium by inks ejected from the nozzles adjacent in the nozzle row direction have a size at which they come into contact with each other on the medium.

5. The liquid ejecting device (10) according to any one of claims 1 to 4, wherein
the liquid is a sublimation transfer ink, and
the liquid ejecting device (10) is a printing apparatus that uses a transfer medium as an ejecting target of the sublimation transfer ink.

6. The liquid ejecting device (10) according to any one of claims 1 to 2, wherein the liquid is an ultraviolet-curable ink that cures by irradiation of ultraviolet light.

7. A liquid ejecting method for ejecting a liquid, the liquid being an ink used for printing, through an inkjet method for printing an image, the liquid ejecting method comprising:
causing an inkjet head (102), including a plurality of nozzles lined up at constant intervals in a predetermined nozzle row direction, to perform a main scan of ejecting the liquid while moving in a main scanning direction intersecting the nozzle row direction, relative to a liquid ejecting target; and
in a control of the main scan,
when an abnormal nozzle (X2) is present, the abnormal nozzle being a nozzle having an abnormal ejection characteristic that deviates from a preset normal range:
causing the abnormal nozzle (X2) not to eject the liquid and causing another nozzle (X1, X3) that is adjacent to and immediately next to the abnormal nozzle (X2) in the nozzle row direction in the same main scan to eject, in the same main scan, liquid of a larger amount than at a normal time when an abnormal nozzle (X2) is not present only at ejecting positions immediately adjacent in the nozzle row direction to ejecting positions of the abnormal nozzle (X2) where ink should have been ejected if the abnormal nozzle (X2) was a normal nozzle and where the liquid of the larger amount is ejectable by the other nozzle (X1, X3) in the same main scan,
the control of the main scan so as to cause the other nozzle (X1, X3) to eject liquid of a larger amount or not to eject liquid of a larger amount when the abnormal nozzle (X2) is present being based on a mask that is prepared in advance without consideration for a specific image to be printed and is a selected one of a plurality of pre-stored masks that are different from each other, the respective mask being data specifying ejecting positions at which the ejection amount of the liquid is increased and ejection amounts to be increased at the ejecting positions so that an amount of liquid to be ejected at the time of the main scan by the other nozzle (X1, X3) becomes larger than at the normal time,
wherein the inkjet head (102) changes a volume of the liquid to be ejected from the nozzle in a plurality of levels; and
the respective mask specifies the number of levels by which the ejection amount is increased at an ejecting position where an ejection amount of the liquid is to be increased,
wherein the respective mask specifies, for a preset number of a plurality of ejecting positions lined up in the main scanning direction, ejecting positions at which the ejection amount of the liquid is to be increased and a plurality of different levels by which the ejecting amount is to be increased, and when an abnormal nozzle (X2) is present, the control of the main scan comprises periodically applying the selected one of the plurality of masks for every preset number of ejecting positions for ejecting the liquid by the adjacent nozzle,
wherein the respective mask has a length in the main scanning direction corresponding to the preset number of ejecting positions lined up in the main scanning direction and a width in the nozzle row direction corresponding to the abnormal nozzle (X2) and the immediately adjacent other nozzle (X1, X3) before and/or after the abnormal nozzle (X2),
wherein the plurality of pre-stored masks are associated with different correction intensities; and
when the abnormal nozzle (X2) is present, the control of the main scan comprises selecting, in advance, the selected one of the masks from the plurality of masks exclusively based on an image density of an image to be printed,
wherein as the image density, an average image density is calculated for the entire image to be printed, or
respective average image densities are calculated for respective parts of the image to be printed and a respective one of the masks is selected corresponding to each of the parts according to the average image density of each of the parts,
wherein the content of the mask is not reflected on those ejecting positions of the other nozzle (X1, X3) which are adjacent to and immediately next to ejecting positions of the abnormal nozzle (X2) in the nozzle row direction where the ink should not have been ejected if the abnormal nozzle was a normal nozzle.

## Patentansprüche

1. Flüssigkeitsausstoßvorrichtung (10), die dazu eingerichtet ist, in einem Tintenstrahlverfahren eine Flüssigkeit auszustoßen, wobei die Flüssigkeitsausstoßvorrichtung (10) eine Druckvorrichtung ist, die dazu eingerichtet ist, ein Bild zu drucken, wobei die Flüssigkeit eine zum Drucken verwendete Tinte ist, wobei die Flüssigkeitsausstoßvorrichtung (10) aufweist:
einen Maskenspeicher, der mehrere voneinander verschiedene Masken speichert,
einen Tintenstrahlkopf (102) mit mehreren Düsen (X1, X2, X3), die in einer vorbestimmten Düsenreihenrichtung in konstanten Intervallen aufgereiht sind;
eine Abtastantriebseinheit (18), die dazu eingerichtet ist, den Tintenstrahlkopf (102) zu veranlassen, einen Hauptlauf mit Ausstoßen der Flüssigkeit durchzuführen, während er sich in einer Hauptlaufrichtung, die die Düsenreihenrichtung schneidet, relativ zu einem Flüssigkeitsausstoßziel bewegt; und
eine Steuereinheit (30), die dazu eingerichtet ist, den Betrieb des Tintenstrahlkopfs (102) und der Abtastantriebseinheit (18) zu steuern,
wobei, wenn eine abnormale Düse (X2) vorhanden ist, wobei die abnormale Düse (X2) eine Düse mit einer abnormalen Ausstoßcharakteristik ist, die von einem voreingestellten Normalbereich abweicht:
die Steuereinheit (30) dazu eingerichtet ist, die abnormale Düse (X2) zu veranlassen, die Flüssigkeit nicht auszustoßen, und eine andere Düse (X1, X3), die in demselben Hauptlauf in der Düsenreihenrichtung benachbart zu und unmittelbar neben der abnormalen Düse (X2) angeordnet ist, zu veranlassen, in demselben Hauptlauf eine größere Menge der Flüssigkeit als zu einem normalen Zeitpunkt, wenn keine abnormale Düse (X2) vorhanden ist, nur an Ausstoßpositionen auszustoßen, die in der Düsenreihenrichtung unmittelbar benachbart zu Ausstoßpositionen der abnormalen Düse (X2) angeordnet sind, wo Tinte ausgestoßen werden sollte, wenn die abnormale Düse (X2) eine normale Düse wäre, und wo die größere Menge der Flüssigkeit durch die andere Düse (X1, X3) in demselben Hauptlauf ausgestoßen werden kann, und
die Steuereinheit (30) dazu eingerichtet ist, wenn die abnormale Düse (X2) vorhanden ist, den Betrieb des Tintenstrahlkopfs (102) dergestalt zu steuern, dass die andere Düse (X1, X3) basierend auf einer im Voraus ohne Berücksichtigung eines spezifischen zu druckenden Bilds vorbereiteten ausgewählten der mehreren in dem Maskenspeicher gespeicherten Masken veranlasst wird, die größere Menge der Flüssigkeit auszustoßen oder keine größere Menge der Flüssigkeit auszustoßen, wobei es sich bei der jeweiligen Maske um Daten handelt, die Ausstoßpositionen, an denen die Ausstoßmenge der Flüssigkeit zu erhöhen ist, und Erhöhungen der Ausstoßmenge an den Ausstoßpositionen spezifizieren, so dass eine Menge der Flüssigkeit, die zu einem Zeitpunkt des Hauptlaufs durch die andere Düse (X1, X3) auszustoßen ist, größer als zu dem normalen Zeitpunkt wird,
wobei der Tintenstrahlkopf (102) ein Volumen der aus der Düse auszustoßenden Flüssigkeit in mehreren Stufen ändert; und
die jeweilige Maske die Anzahl von Stufen angibt, um die die Ausstoßmenge an einer Ausstoßposition erhöht wird, an der eine Ausstoßmenge der Flüssigkeit erhöht werden soll,
wobei die jeweilige Maske für eine voreingestellte Anzahl von mehreren Ausstoßpositionen, die in der Hauptlaufrichtung aufgereiht sind, Ausstoßpositionen, an denen die Ausstoßmenge der Flüssigkeit zu erhöhen ist, und mehrere verschiedene Stufen angibt, um welche die Ausstoßmenge zu erhöhen ist, und wenn eine abnormale Düse (X2) vorhanden ist, die Steuereinheit (30) dazu eingerichtet ist, zum Ausstoßen der Flüssigkeit durch die benachbarte Düse die ausgewählte eine der mehreren Masken für jede voreingestellte Anzahl von Ausstoßpositionen periodisch anzuwenden,
wobei die jeweilige Maske eine Länge in der Hauptlaufrichtung aufweist, die der voreingestellten Anzahl von in der Hauptlaufrichtung aufgereihten Ausstoßpositionen entspricht, und eine Breite in der Düsenreihenrichtung aufweist, die der abnormalen Düse (X2) und der unmittelbar benachbarten anderen Düse (X1, X3) vor und/oder nach der abnormalen Düse (X2) entspricht,
wobei die mehreren in dem Maskenspeicher gespeicherten Masken verschiedenen Korrekturintensitäten zugeordnet sind; und
wenn die abnormale Düse (X2) vorhanden ist, die Steuereinheit (30) dazu eingerichtet ist, die ausgewählte eine der Masken aus den mehreren Masken im Voraus ausschließlich basierend auf einer Bilddichte eines zu druckenden Bilds auszuwählen,
wobei als die Bilddichte eine durchschnittliche Bilddichte für das gesamte zu druckende Bild berechnet wird, oder
jeweilige durchschnittliche Bilddichten für jeweilige Teile des zu druckenden Bilds berechnet werden und eine jeweilige der Masken entsprechend einem jeweiligen der Teile gemäß der durchschnittlichen Bilddichte des jeweiligen Teiles ausgewählt wird,
wobei an denjenigen Ausstoßpositionen der anderen Düse (X1, X3), die benachbart zu und unmittelbar neben Ausstoßpositionen der abnormalen Düse (X2) in der Düsenreihenrichtung angeordnet sind, an denen keine Tinte ausgestoßen werden sollte, selbst wenn die abnormale Düse eine normale Düse wäre, der Inhalt der Maske nicht reflektiert wird.

2. Flüssigkeitsausstoßvorrichtung (10) nach Anspruch 1, wobei
die Steuereinheit (30) dazu eingerichtet ist, jede der Düsen des Tintenstrahlkopfs (102) dazu zu veranlassen, die Flüssigkeit basierend auf einem Rasterbild auszustoßen, das Ausstoßpositionen der Flüssigkeit angibt, und
wenn eine abnormale Düse (X2) vorhanden ist, die Steuereinheit (30) dazu eingerichtet ist, das Rasterbild basierend auf der Maske zu korrigieren und jede der Düsen dazu zu veranlassen, die Flüssigkeit basierend auf dem korrigierten Rasterbild auszustoßen.

3. Flüssigkeitsausstoßvorrichtung (10) nach einem der Ansprüche 1 oder 2, wobei die Abtastantriebseinheit (18) dazu eingerichtet ist, den Tintenstrahlkopf (102) dazu zu veranlassen, den Hauptlauf dergestalt durchzuführen, dass in Bezug auf jede Position des Flüssigkeitsausstoßziels nur ein Hauptlauf durchgeführt wird.

4. Flüssigkeitsausstoßvorrichtung (10) nach einem der Ansprüche 1 bis 3, wobei
die Flüssigkeitsausstoßvorrichtung (10) eine Druckvorrichtung ist, die ein Stoffmedium als Flüssigkeitsausstoßziel verwendet,
die Flüssigkeit eine Tinte ist, die zum Drucken verwendet wird, und
in dem Hauptlauf der Tintenstrahlkopf (102) dazu eingerichtet ist, Tinte aus jeder der Düsen dergestalt auszustoßen, dass Tintenpunkte, die auf dem Medium durch Tinten gebildet werden, die aus in der Düsenreihenrichtung benachbarten Düsen ausgestoßen werden, eine Größe aufweisen, bei der sie auf dem Medium miteinander in Kontakt kommen.

5. Flüssigkeitsausstoßvorrichtung (10) nach einem der Ansprüche 1 bis 4, wobei
die Flüssigkeit eine Sublimationstransfertinte ist, und
die Flüssigkeitsausstoßvorrichtung (10) eine Druckvorrichtung ist, die ein Transfermedium als Ausstoßziel der Sublimationstransfertinte verwendet.

6. Flüssigkeitsausstoßvorrichtung (10) nach einem der Ansprüche 1 bis 2, wobei die Flüssigkeit eine ultraviolett-härtbare Tinte ist, die bei Bestrahlung mit ultraviolettem Licht aushärtet.

7. Flüssigkeitsausstoßverfahren zum Ausstoßen einer Flüssigkeit in einem Tintenstrahlverfahren zum Drucken eines Bilds, wobei die Flüssigkeit eine zum Drucken verwendete Tinte ist, wobei das Flüssigkeitsausstoßverfahren umfasst:
Veranlassen, dass ein Tintenstrahlkopf (102) mit mehreren Düsen, die in einer vorbestimmten Düsenreihenrichtung in konstanten Intervallen aufgereiht sind, einen Hauptlauf mit Ausstoßen der Flüssigkeit durchführt, während er sich in einer Hauptlaufrichtung, die die Düsenreihenrichtung schneidet, relativ zu einem Flüssigkeitsausstoßziel bewegt; und
bei einer Steuerung des Hauptlaufs,
wenn eine abnormale Düse (X2) vorhanden ist, wobei die abnormale Düse eine Düse mit einer abnormalen Ausstoßcharakteristik ist, die von einem voreingestellten Normalbereich abweicht:
Veranlassen, dass die abnormale Düse (X2) die Flüssigkeit nicht ausstößt, und Veranlassen, dass eine andere Düse (X1, X3), die in demselben Hauptlauf in der Düsenreihenrichtung benachbart zu und unmittelbar neben der abnormalen Düse (X2) angeordnet ist, in demselben Hauptlauf eine größere Menge der Flüssigkeit als zu einem normalen Zeitpunkt, wenn keine abnormale Düse (X2) vorhanden ist, nur an Ausstoßpositionen ausstößt, die in der Düsenreihenrichtung unmittelbar benachbart zu Ausstoßpositionen der abnormalen Düse (X2) angeordnet sind, wo Tinte ausgestoßen werden sollte, wenn die abnormale Düse (X2) eine normale Düse wäre, und wo die größere Menge der Flüssigkeit durch die andere Düse (X1, X3) in demselben Hauptlauf ausgestoßen werden kann,
die Steuerung des Hauptlaufs, um zu veranlassen, dass die andere Düse (X1, X3) eine größere Menge der Flüssigkeit ausstößt oder keine größere Menge der Flüssigkeit ausstößt, wenn die abnormale Düse (X2) vorhanden ist, auf einer im Voraus ohne Berücksichtigung eines spezifischen zu druckenden Bildes vorbereiteten ausgewählten der mehreren in dem Maskenspeicher gespeicherten, unterschiedlichen Masken ist, wobei es sich bei der jeweiligen Maske um Daten handelt, die Ausstoßpositionen an denen die Ausstoßmenge der Flüssigkeit erhöht wird, und Ausstoßmengen, die an den Ausstoßpositionen erhöht werden sollen, angeben, so dass eine Menge der Flüssigkeit, die zum Zeitpunkt des Hauptlaufs durch die andere Düse (X1, X3) ausgestoßen werden soll, größer als zu dem normalen Zeitpunkt wird,
wobei der Tintenstrahlkopf (102) ein Volumen der aus der Düse auszustoßenden Flüssigkeit in mehreren Stufen ändert; und
die jeweilige Maske die Anzahl von Stufen angibt, um die die Ausstoßmenge an einer Ausstoßposition erhöht wird, an der eine Ausstoßmenge der Flüssigkeit erhöht werden soll,
wobei die jeweilige Maske für eine voreingestellte Anzahl von mehreren Ausstoßpositionen, die in der Hauptlaufrichtung aufgereiht sind, Ausstoßpositionen, an denen die Ausstoßmenge der Flüssigkeit zu erhöhen ist, und mehrere verschiedene Stufen angibt, um welche die Ausstoßmenge zu erhöhen ist, und wenn eine abnormale Düse (X2) vorhanden ist, die Steuerung des Hauptlaufs umfasst, zum Ausstoßen der Flüssigkeit durch die benachbarte Düse die ausgewählte eine der mehreren Masken für jede voreingestellte Anzahl von Ausstoßpositionen anzuwenden,
wobei die jeweilige Maske eine Länge in der Hauptlaufrichtung aufweist, die der voreingestellten Anzahl von in der Hauptlaufrichtung aufgereihten Ausstoßpositionen entspricht, und eine Breite in der Düsenreihenrichtung aufweist, die der abnormalen Düse (X2) und der unmittelbar benachbarten anderen Düse (X1, X3) vor und/oder nach der abnormalen Düse (X2) entspricht,
wobei die mehreren vorab gespeicherten Masken verschiedenen Korrekturintensitäten zugeordnet sind; und
wenn die abnormale Düse (X2) vorhanden ist, die Steuerung des Hauptlaufs umfasst, die ausgewählte eine der Masken aus den mehreren Masken im Voraus ausschließlich basierend auf einer Bilddichte eines zu druckenden Bilds auszuwählen,
wobei als die Bilddichte eine durchschnittliche Bilddichte für das gesamte zu druckende Bild berechnet wird, oder
jeweilige durchschnittliche Bilddichten für jeweilige Teile des zu druckenden Bilds berechnet werden und eine jeweilige der Masken entsprechend einem jeweiligen der Teile gemäß der durchschnittlichen Bilddichte des jeweiligen Teiles ausgewählt wird,
wobei an denjenigen Ausstoßpositionen der anderen Düse (X1, X3), die benachbart zu und unmittelbar neben Ausstoßpositionen der abnormalen Düse (X2) in der Düsenreihenrichtung angeordnet sind, an denen keine Tinte ausgestoßen werden sollte, selbst wenn die abnormale Düse eine normale Düse wäre, der Inhalt der Maske nicht reflektiert wird.

## Revendications

1. Dispositif d'éjection de liquide (10) conçu pour éjecter un liquide par l'intermédiaire d'un procédé de jet d'encre, le dispositif d'éjection de liquide (10) étant un appareil d'impression conçu pour imprimer une image, le liquide étant une encre utilisée à des fins d'impression, le dispositif d'éjection de liquide (10) comprenant :
un organe de mémorisation de masques qui mémorise une pluralité de masques qui sont différents les uns des autres,
une tête à jet d'encre (102) comprenant une pluralité de buses (X1, X2, X3) alignées à des intervalles constants dans une direction de rangée de buses prédéterminée;
une unité d'entraînement de balayage (18) conçue pour amener la tête à jet d'encre (102) à exécuter un balayage principal d'éjection du liquide tout en se déplaçant dans une direction de balayage principal coupant la direction de rangée de buses, par rapport à une cible d'éjection de liquide ; et
une unité de commande (30) configurée pour commander une mise en oeuvre de la tête à jet d'encre (102) et de l'unité d'entraînement de balayage (18),
dans lequel, en présence d'une buse présentant une anomalie (X2), la buse présentant une anomalie (X2) étant une buse ayant une caractéristique d'éjection anormale qui s'écarte d'une plage normale prédéfinie :
l'unité de commande (30) est configurée pour amener la buse présentant une anomalie (X2) à ne pas éjecter le liquide et pour amener une autre buse (X1, X3) qui est adjacente à la buse présentant une anomalie (X2), et immédiatement à proximité de cette dernière, dans la direction de rangée de buses lors du même balayage principal à n'éjecter, lors du même balayage principal, du liquide en une quantité plus grande que celle d'un instant normal auquel aucune buse présentant une anomalie (X2) n'est présente, qu'au niveau de positions d'éjection immédiatement adjacentes dans la direction de rangée de buses à des positions d'éjection de la buse présentant une anomalie (X2) au niveau desquelles de l'encre aurait dû être éjectée si la buse présentant une anomalie (X2) avait été une buse ne présentant pas d'anomalie et au niveau desquelles le liquide en la quantité plus grande peut être éjecté par l'autre buse (X1, X3) lors du même balayage principal, et
l'unité de commande (30) est configurée pour commander la mise en oeuvre de la tête à jet d'encre (102) de façon à amener l'autre buse (X1, X3) à éjecter du liquide en une quantité plus grande ou à ne pas éjecter de liquide en une quantité plus grande en présence de la buse présentant une anomalie (X2) sur la base d'un masque qui est préparé à l'avance sans considération d'une image spécifique à imprimer et qui est un masque sélectionné parmi les masques de la pluralité de masques mémorisés dans l'organe de mémorisation de masques, le masque respectif correspondant à des données spécifiant des positions d'éjection au niveau desquelles la quantité d'éjection du liquide est augmentée et des quantités d'éjection qu'il convient d'augmenter au niveau des positions d'éjection de sorte qu'une quantité du liquide à éjecter à un instant du balayage principal par l'autre buse (X1, X3) prenne une valeur supérieure à celle correspondant à l'instant normal,
dans lequel la tête à jet d'encre (102) modifie un volume du liquide à éjecter de la buse selon les niveaux d'une pluralité de niveaux ; et
le masque respectif spécifie le nombre de niveaux selon lequel la quantité d'éjection est augmentée à une position d'éjection au niveau de laquelle il convient d'augmenter une quantité d'éjection du liquide,
dans lequel le masque respectif spécifie, pour un nombre prédéfini de positions d'une pluralité de positions d'éjection alignées dans la direction de balayage principal, des positions d'éjection au niveau desquelles il convient d'augmenter la quantité d'éjection du liquide et les niveaux d'une pluralité de niveaux différents selon lesquels il convient d'augmenter la quantité d'éjection, et en présence d'une buse présentant une anomalie (X2), l'unité de commande (30) est configurée pour appliquer périodiquement le masque sélectionné des masques de la pluralité de masques pour chaque nombre prédéfini de positions d'éjection à des fins d'éjection du liquide par la buse adjacente,
dans lequel le masque respectif a une longueur dans la direction de balayage principal correspondant au nombre prédéfini de positions d'éjection alignées dans la direction de balayage principal et une largeur dans la direction de rangée de buses correspondant à la buse présentant une anomalie (X2) et à l'autre buse immédiatement adjacente (X1, X3) précédant et/ou suivant la buse présentant une anomalie (X2),
dans lequel les masques de la pluralité de masques mémorisés dans l'organe de mémorisation de masques sont associés à des intensités de correction différentes ; et
en présence de la buse présentant une anomalie (X2), l'unité de commande (30) est configurée pour sélectionner, à l'avance, le masque sélectionné des masques à partir des masques de la pluralité de masques sur la base exclusivement d'une densité d'image d'une image à imprimer,
dans lequel, en tant que la densité d'image, une densité d'image moyenne est calculée pour toute l'image à imprimer, ou
des densités d'image moyennes respectives sont calculées pour des parties respectives de l'image à imprimer et un masque respectif des masques est sélectionné en correspondance avec chacune des parties conformément à la densité d'image moyenne de chacune des parties,
dans lequel le contenu du masque n'est pas réfléchi sur les positions d'éjection de l'autre buse (X1, X3) qui sont adjacentes aux positions d'éjection, et immédiatement à proximité de ces dernières, de la buse présentant une anomalie (X2) dans la direction de rangée de buses au niveau desquelles de l'encre n'aurait pas dû être éjectée si la buse présentant une anomalie avait été une buse ne présentant pas d'anomalie.

2. Dispositif d'éjection de liquide (10) selon la revendication 1, dans lequel
l'unité de commande (30) est configurée pour amener chacune des buses de la tête à jet d'encre (102) à éjecter le liquide sur la base d'une image tramée indiquant des positions d'éjection du liquide, et
en présence d'une buse présentant une anomalie (X2), l'unité de commande (30) est configurée pour corriger l'image tramée sur la base du masque, et pour amener chacune des buses à éjecter le liquide sur la base de l'image tramée corrigée.

3. Dispositif d'éjection de liquide (10) selon l'une ou l'autre des revendications 1 et 2, dans lequel l'unité d'entraînement de balayage (18) est conçue pour amener la tête à jet d'encre (102) à exécuter le balayage principal de façon à n'exécuter un balayage principal que par rapport à chaque position de la cible d'éjection de liquide.

4. Dispositif d'éjection de liquide (10) selon l'une quelconque des revendications 1 à 3, dans lequel
le dispositif d'éjection de liquide (10) est un appareil d'impression qui utilise un support sous forme d'étoffe en tant que cible d'éjection de liquide,
le liquide est une encre utilisée à des fins d'impression, et
lors du balayage principal, la tête à jet d'encre (102) est conçue pour éjecter de l'encre à partir de chacune des buses de sorte que des points d'encre formés sur le support par des encres éjectées à partir des buses adjacentes dans la direction de rangée de buses aient une taille selon laquelle ils viennent en contact les uns avec les autres sur le support.

5. Dispositif d'éjection de liquide (10) selon l'une quelconque des revendications 1 à 4, dans lequel
le liquide est une encre de transfert par sublimation, et
le dispositif d'éjection de liquide (10) est un appareil d'impression qui utilise un support de transfert en tant que cible d'éjection de l'encre de transfert par sublimation.

6. Dispositif d'éjection de liquide (10) selon l'une ou l'autre des revendications 1 et 2, dans lequel le liquide est une encre pouvant sécher sous ultraviolet qui sèche par une exposition à un rayonnement de lumière ultraviolette.

7. Procédé d'éjection de liquide pour éjecter un liquide, le liquide étant une encre utilisée à des fins d'impression, par l'intermédiaire d'un procédé de jet d'encre pour imprimer une image, le procédé d'éjection de liquide comprenant les étapes consistant à :
amener une tête à jet d'encre (102), comprenant une pluralité de buses alignées à des intervalles constants dans une direction de rangée de buses prédéterminée, à exécuter un balayage principal d'éjection du liquide tout en se déplaçant dans une direction de balayage principal coupant la direction de rangée de buses, par rapport à une cible d'éjection de liquide ; et
lors d'une commande du balayage principal,
en présence d'une buse présentant une anomalie (X2), la buse présentant une anomalie étant une buse ayant une caractéristique d'éjection anormale qui s'écarte d'une plage normale prédéfinie :
amener la buse présentant une anomalie (X2) à ne pas éjecter le liquide et amener une autre buse (X1, X3) qui est adjacente à la buse présentant une anomalie (X2), et immédiatement à proximité de cette dernière, dans la direction de rangée de buses lors du même balayage principal à n'éjecter, lors du même balayage principal, du liquide en une quantité plus grande que celle d'un instant normal auquel aucune buse présentant une anomalie (X2) n'est présente, qu'au niveau de positions d'éjection immédiatement adjacentes dans la direction de rangée de buses à des positions d'éjection de la buse présentant une anomalie (X2) au niveau desquelles de l'encre aurait dû être éjectée si la buse présentant une anomalie (X2) avait été une buse ne présentant pas d'anomalie et au niveau desquelles le liquide en la quantité plus grande peut être éjecté par l'autre buse (X1, X3) lors du même balayage principal,
commander le balayage principal de façon à amener l'autre buse (X1, X3) à éjecter du liquide en une quantité plus grande ou à ne pas éjecter de liquide en une quantité plus grande en présence de la buse présentant une anomalie (X2) sur la base d'un masque qui est préparé à l'avance sans considération d'une image spécifique à imprimer et qui est un masque sélectionné parmi les masques d'une pluralité de masques mémorisés au préalable qui sont différents les uns des autres, le masque respectif correspondant à des données spécifiant des positions d'éjection au niveau desquelles la quantité d'éjection du liquide est augmentée et des quantités d'éjection qu'il convient d'augmenter au niveau des positions d'éjection de sorte qu'une quantité du liquide à éjecter à un instant du balayage principal par l'autre buse (X1, X3) prenne une valeur supérieure à celle correspondant à l'instant normal,
dans lequel la tête à jet d'encre (102) modifie un volume du liquide à éjecter à partir de la buse selon une pluralité de niveaux ; et
le masque respectif spécifie le nombre de niveaux selon lequel la quantité d'éjection est augmentée à une position d'éjection au niveau de laquelle il convient d'augmenter une quantité d'éjection du liquide,
dans lequel le masque respectif spécifie, pour un nombre prédéfini d'une pluralité de positions d'éjection alignées dans la direction de balayage principal, des positions d'éjection au niveau desquelles il convient d'augmenter la quantité d'éjection du liquide et une pluralité de niveaux différents selon lesquels il convient d'augmenter la quantité d'éjection et, en présence d'une buse présentant une anomalie (X2), la commande du balayage principal consiste à appliquer périodiquement le masque sélectionné parmi les masques de la pluralité de masques pour chaque nombre prédéfini de positions d'éjection à des fins d'éjection du liquide par la buse adjacente,
dans lequel le masque respectif a une longueur dans la direction de balayage principal correspondant au nombre prédéfini de positions d'éjection alignées dans la direction de balayage principal et une largeur dans la direction de rangée de buses correspondant à la buse présentant une anomalie (X2) et à l'autre buse immédiatement adjacente (X1, X3) précédant et/ou suivant la buse présentant une anomalie (X2),
dans lequel les masques de la pluralité de masques mémorisés au préalable sont associés à des intensités de correction différentes ; et
en présence de la buse présentant une anomalie (X2), la commande du balayage principal consiste à sélectionner, à l'avance, le masque sélectionné des masques à partir des masques de la pluralité de masques sur la base exclusivement d'une densité d'image d'une image à imprimer,
dans lequel en tant que la densité d'image, une densité d'image moyenne est calculée pour toute l'image à imprimer, ou
des densités d'image moyennes respectives sont calculées pour des parties respectives de l'image à imprimer et un masque respectif des masques est sélectionné en correspondance avec chacune des parties conformément à la densité d'image moyenne de chacune des parties,
dans lequel le contenu du masque n'est pas réfléchi sur les positions d'éjection de l'autre buse (X1, X3) qui sont adjacentes à des positions d'éjection, et immédiatement à proximité de ces dernières, de la buse présentant une anomalie (X2) dans la direction de rangée de buses au niveau desquelles de l'encre n'aurait pas dû être éjectée si la buse présentant une anomalie avait été une buse ne présentant pas d'anomalie.
